# EUROPÄISCHE PATENTSCHRIFT

(11) **EP 2 788 727 B1**
(45) Veröffentlichungstag und Bekanntmachung des Hinweises auf die Patenterteilung: **23.03.2016**
(21) Anmeldenummer: 12808712.9
(22) Anmeldetag: 06.12.2012
(51) Int. Cl.: G01F 23/296, F16N 19/00

(54) **ULTRASCHALLSENSOR ZUR ERFASSUNG DES FÜLLSTANDS EINER FLÜSSIGKEIT IN EINEM BEHÄLTER**
FILL LEVEL SENSOR FOR DETECTING THE FILL LEVEL OF A LIQUID IN A CONTAINER
CAPTEUR DE NIVEAU POUR DÉTECTER LE NIVEAU D'UN LIQUIDE DANS UN RÉSERVOIR

(30) Priorität: 08.12.2011 DE 102011087981
(43) Veröffentlichungstag der Anmeldung: 15.10.2014
(73) Patentinhaber: Continental Automotive GmbH, 30165 Hannover (DE)
(72) Erfinder: JÄGER, Wighard, 91080 Spardorf (DE); PFEIFFER, Karl-Friedrich, 91058 Erlangen (DE); WEBER, Claus, 90513 Zirndorf (DE)
(86) Internationale Anmeldenummer: PCT/EP2012/074656
(87) Internationale Veröffentlichungsnummer: WO 2013/083700

(56) Entgegenhaltungen:
- WO-A1-2008/009277

## Beschreibung

Die Erfindung betrifft einen Füllstandssensor zur Erfassung des Füllstands einer Flüssigkeit in einem Behälter mit einem Ultraschallsender und -empfänger. Derartige Füllstandssensoren werden auf den unterschiedlichsten Anwendungsfeldern und für unterschiedliche Flüssigkeiten eingesetzt. Mit Hilfe des Ultraschallsenders werden Ultraschallwellen ausgesendet, die von einer Grenzfläche der Flüssigkeit zu einem angrenzenden Medium reflektiert werden. Die reflektierten Ultraschallwellen werden von dem Ultraschallempfänger empfangen. Mit Hilfe einer geeigneten Auswertung kann beispielsweise auf Grundlage der Laufzeit der Schallwellen ein Füllstand der Flüssigkeit in dem Behälter ermittelt werden. Verformungen der Grenzfläche aufgrund von Bewegungen der Flüssigkeit oder Schaumbildung an der Oberfläche der Flüssigkeit können dieses Messverfahren beeinträchtigen. Daher ist es bekannt geworden, innerhalb der Flüssigkeit sogenannte Beruhigungsrohre einzusetzen, die Bewegungen der Grenzfläche dämpfen und einer Schaumbildung entgegenwirken.

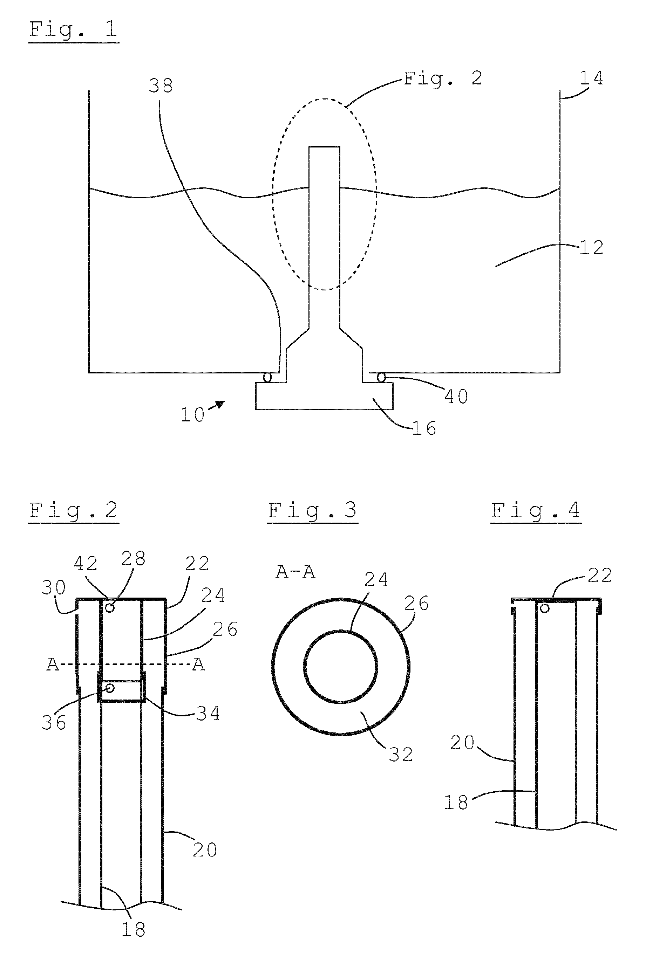

Die genannten Probleme treten insbesondere bei der Messung des Füllstands in einem Öltank in einem Kraftfahrzeug auf, weil das Öl während der Fahrt ständig im Tank hin- und herschwappt und überdies zu einer Schaumbildung neigt, unter Umständen verstärkt durch Vibrationen des Fahrzeugs. Für die Anwendung in solchen Öltanks in Kraftfahrzeugen sind daher Füllstandssensoren mit den Merkmalen des Oberbegriffs des Anspruchs 1 bekannt geworden. Diese bekannte Anordnung ist ausschnittsweise in der Fig. 4 gezeigt. Sie weist ein inneres Rohr 18 zur Anordnung in dem Öltank auf, das oberhalb des Ultraschallsenders und -empfängers angeordnet ist. In dem Öltank befindliches Öl bildet in dem inneren Rohr 18 eine Flüssigkeitssäule aus, deren Höhe mit dem Ultraschallsender und -empfänger erfasst wird. Das innere Rohr 18 ist von einem äußeren Rohr 20 umgeben. Eine Kappe 22 deckt das innere Rohr 18 und das äußere Rohr 20 nach oben ab. Das innere Rohr 18 dient der Führung des Ultraschalls. Die obere Grenzfläche der Flüssigkeitssäule in dem inneren Rohr 18 zur darüber befindlichen Luft wird durch die beiden ineinander angeordneten Rohre 18, 20 wirksam beruhigt. Durch die Kappe 22 wird außerdem verhindert, dass während der Fahrt Öl von oben in das innere Rohr 18 oder das äußere Rohr 20 hineinspritzt, was die Grenzfläche weiter beruhigt und einer Schaumbildung entgegenwirkt.

Bei der bekannten Anordnung befinden sich die unteren Enden des inneren Rohrs 18 und des äußeren Rohrs 20 zweckmäßigerweise nahe dem tiefsten Punkt des Behälters. Die oberen Enden des inneren Rohrs 18 und des äußeren Rohrs 20 sowie die Kappe 22 befinden sich oberhalb des höchsten zu erfassenden Füllstandes. Somit müssen die Längen des inneren Rohrs 18 und des äußeren Rohrs 20 genau auf den jeweiligen Anwendungsfall abgestimmt werden.

Ein weiterer Füllstandssensor zur Messung des Pegels des Motoröls ist aus WO2008/009277 bekannt.

Davon ausgehend ist es die Aufgabe der Erfindung, einen Füllstandssensor mit den Merkmalen des Oberbegriffs des Anspruchs 1 zur Verfügung zu stellen, der einfacher und kostengünstiger an unterschiedliche Anwendungsfälle und Einbausituationen angepasst werden kann.

Diese Aufgabe wird gelöst durch den Füllstandssensor mit den Merkmalen des Anspruchs 1. Vorteilhafte Ausgestaltungen sind in den sich anschließenden Unteransprüchen angegeben.

Der Füllstandssensor dient zur Erfassung des Füllstands einer Flüssigkeit in einem Behälter und hat
- einen Ultraschallsender und -empfänger,
- ein inneres Rohr zur Anordnung in dem Behälter, das oberhalb des Ultraschallsenders und -empfängers angeordnet ist, so dass eine in dem Behälter befindliche Flüssigkeit in dem inneren Rohr eine Flüssigkeitssäule ausbildet, deren Höhe mit dem Ultraschallsender und -empfänger erfassbar ist,
- ein äußeres Rohr, das das innere Rohr umgibt,
- eine Kappe, die das innere Rohr und das äußere Rohr nach oben abdeckt, wobei
- die Kappe einen inneren rohrförmigen Abschnitt, der sich an das innere Rohr anschließt, einen äußeren rohrförmigen Abschnitt, der sich an das äußere Rohr anschließt, eine innere Entlüftungsöffnung für den inneren rohrförmigen Abschnitt und eine äußere Entlüftungsöffnung für den äußeren rohrförmigen Abschnitt aufweist.

Die Ultraschallwellen werden von dem Ultraschallsender ausgesendet und durchlaufen die in dem inneren Rohr aufgenommene Flüssigkeitssäule. Sie werden am oberen Ende der Flüssigkeitssäule, an einer Grenzfläche zu dem darüber befindlichen Medium, reflektiert, durchlaufen die Flüssigkeitssäule erneut in entgegengesetzter Richtung und werden von dem Ultraschallempfänger empfangen. Mit Hilfe einer geeigneten Auswerteeinrichtung kann die Höhe der Flüssigkeitssäule bestimmt werden, insbesondere aus der Laufzeit der Ultraschallwellen.

Der innere rohrförmige Abschnitt der Kappe schließt sich an das innere Rohr nach oben an, so dass die Flüssigkeitssäule bei einem Füllstand der Flüssigkeit oberhalb des oberen Endes des inneren Rohrs über dieses Ende hinaus nach oben in die Kappe hinein erstrecken kann. In diesem Fall wird die Flüssigkeitssäule von dem inneren Rohr und dem inneren rohrförmigen Abschnitt umgeben und das innere Rohr und der innere rohrförmige Abschnitt bewirken gemeinsam die gewünschte Beruhigung der Grenzfläche und Führung der Ultraschallwellen. Da sich der innere rohrförmige Abschnitt an das innere Rohr anschließt, ergeben sich hinsichtlich der Ultraschallmessung dieselben Verhältnisse wie bei einem entsprechend länger ausgebildeten inneren Rohr in Verbindung mit einer herkömmlichen Kappe, die keinen rohrförmigen Abschnitt aufweist. Das Messverfahren, insbesondere das Aussenden und Auswerten der Ultraschallsignale braucht daher gegenüber dem herkömmlichen Verfahren nicht verändert zu werden.

Der Ultraschallsender und -empfänger kann einen einzigen Schallwandler aufweisen, der sowohl für die Wandlung elektrischer Signale in Ultraschallwellen als auch für die Wandlung der reflektierten Ultraschallwellen in elektrische Signale zuständig ist und somit als kombinierter Sender und Empfänger arbeitet.

Das innere Rohr und das äußere Rohr können zylindrisch sein. Sie können einen kreisrunden, rechteckigen oder polygonalen Querschnitt aufweisen. Zwischen dem inneren Rohr und dem äußeren Rohr kann ein Ringspalt ausgebildet sein. Insbesondere können beide Rohre kreiszylindrisch sein und konzentrisch zueinander angeordnet.

Die Kappe ist oberhalb des inneren Rohrs und des äußeren Rohrs angeordnet und deckt die beiden Rohre nach oben ab. Sie weist einen inneren rohrförmigen Abschnitt auf, dessen Querschnitt in Form und Größe dem inneren Rohr entsprechen kann. Außerdem weist die Kappe einen äußeren rohrförmigen Abschnitt auf, dessen Querschnitt in Form und Größe dem äußeren Rohr entsprechen kann. Die beiden rohrförmigen Abschnitte schließen sich an die beiden genannten Rohre an, so dass der Innenraum des inneren Rohrs nach oben durch den Innenraum des inneren rohrförmigen Abschnitts fortgesetzt wird. Ebenso wird der Zwischenraum zwischen dem inneren Rohr und dem äußeren Rohr nach oben durch einen Zwischenraum zwischen dem inneren rohrförmigen Abschnitt und dem äußeren rohrförmigen Abschnitt fortgesetzt.

Damit sich innerhalb des inneren Rohrs die Flüssigkeitssäule ausbilden kann, gibt es eine Verbindung zwischen dem inneren Raum des inneren Rohrs und dem umgebenden Behälterinnenraum. Diese Verbindung kann beispielsweise in Form einer Durchgangsöffnung in dem inneren Rohr nahe dem unteren Ende des inneren Rohrs ausgebildet sein, beispielsweise in einer zylindrischen Wandung des inneren Rohrs. Alternativ kann eine Durchgangsöffnung mit dieser Wirkung in einem sich unten an das innere Rohr anschließenden Gehäuseteil ausgebildet sein. Eine derartige Durchgangsöffnung kann den Innenraum des inneren Rohrs unmittelbar mit dem Zwischenraum zwischen dem inneren Rohr und dem äußeren Rohr verbinden.

Der Innenraum des äußeren Rohrs ist seinerseits mit dem umgebenden Innenraum des Behälters verbunden, damit die Flüssigkeit aus dem Behälter in den Zwischenraum zwischen dem inneren Rohr und dem äußeren Rohr einströmen kann. Hierzu kann eine Durchgangsöffnung nahe des unteren Endes des äußeren Rohrs in dem äußeren Rohr ausgebildet sein. Alternativ kann eine Durchgangsöffnung in einem angrenzenden Gehäuseteil ausgebildet sein.

Die innere Entlüftungsöffnung der Kappe für den inneren rohrförmigen Abschnitt sorgt dafür, dass das oberhalb der Flüssigkeit in dem Behälter befindliche Medium in den oberen rohrförmigen Abschnitt und das innere Rohr einströmen bzw. daraus entweichen kann, so dass die Flüssigkeitssäule in dem inneren Rohr und gegebenenfalls in dem sich daran anschließenden inneren rohrförmigen Abschnitt entsprechend dem Füllstand im Behälter steigen oder sinken kann.

Die äußere Entlüftungsöffnung ist so angeordnet, dass das Medium oberhalb der Flüssigkeit aus dem Zwischenraum zwischen dem inneren Rohr und dem äußeren Rohr bzw. aus dem sich oberhalb daran anschließenden Zwischenraum zwischen dem inneren rohförmigen Abschnitt und dem äußeren rohrförmigen Abschnitt entweichen bzw. in diesen Bereich einströmen kann, so dass sich der Flüssigkeitspegel in dem genannten Bereich an den Füllstand des Behälters anpassen kann.

Durch die Fortsetzung des inneren Rohrs und des äußeren Rohrs durch den inneren rohrförmigen Abschnitt und den äußeren rohrförmigen Abschnitt der Kappe können die Gesamtlänge des Füllstandssensors und dessen äußere Abmessungen sowie der nutzbare Füllstandsbereich bei unveränderter Länge des inneren Rohrs und des äußeren Rohrs allein dadurch angepasst werden, dass die Länge des inneren rohrförmigen Abschnitts und des äußeren rohrförmigen Abschnitts der Kappe verändert wird. Es ist daher möglich, für unterschiedlich dimensionierte Füllstandssensoren lediglich unterschiedliche Kappen einzusetzen, während die übrigen Komponenten, insbesondere das innere Rohr und das äußere Rohr, in einer Standardlänge verwendet werden können. Es ist daher nur die Anpassung eines einzigen Bauteils erforderlich. Dieses Bauteil ist zudem relativ kompakt, so dass die Herstellungs- und Werkzeugkosten für eine Kappe mit angepassten Abmessungen wesentlich geringer sind als die entsprechenden Kosten, die bei der Herstellung von an den Anwendungsfall angepassten inneren und äußeren Rohren passgenauer Länge unter Verwendung einer herkömmlichen Kappe anfallen.

In einer Ausgestaltung ist die Länge des inneren rohrförmigen Abschnitts und/oder des äußeren rohrförmigen Abschnitts größer als der Innendurchmesser des inneren Rohrs. Die genannte Länge kann auch größer sein als der Außendurchmesser des inneren Rohrs oder als der Innendurchmesser des äußeren Rohrs oder als dessen äußerer Durchmesser. In diesen Fällen weist der innere rohrförmige Abschnitt und/oder der äußere rohrförmige Abschnitt eine beträchtliche Länge auf, so dass das innere Rohr und das äußere Rohr so weit verlängert werden, dass sich ein vergrößerter Messbereich ergibt. Durch Verwendung einer Kappe mit entsprechend langen inneren und äußeren rohrförmigen Abschnitten können das innere Rohr und das äußere Rohr so weit verkürzt werden, dass sie selbst bei Anwendungen, die sehr kompakte Füllstandssensoren erfordern, einsetzbar sind. Dadurch wird die weitgehende Verwendung von Gleichteilen für unterschiedlichste Anwendungsfälle ermöglicht.

In einer Ausgestaltung verbindet die innere Entlüftungsöffnung das Innere des inneren rohrförmigen Abschnitts mit einem Zwischenraum zwischen dem inneren rohrförmigen Abschnitt und dem äußeren rohrförmigen Abschnitt. Der Zwischenraum kann ringspaltförmig, insbesondere kreisringspaltförmig, ausgebildet sein. Alternativ kann die innere Entlüftungsöffnung das Innere des rohrförmigen Abschnitts unmittelbar mit dem umgebenden Innenraum des Behälters, beispielsweise oberhalb der Kappe, verbinden. Durch die Verbindung zu dem genannten Zwischenraum wird gleichzeitig eine wirksame Entlüftung sichergestellt und eine weitere Beruhigung der oberen Grenzfläche der Flüssigkeitssäule erreicht.

In einer Ausgestaltung ist die innere Entlüftungsöffnung in einer Wandung des inneren rohrförmigen Abschnitts ausgebildet. Die Wandung kann zum Beispiel zylindrisch sein. Auf diese Weise wird eine besonders einfache Verbindung erzielt.

In einer Ausgestaltung gleicht der Innendurchmesser des inneren rohrförmigen Abschnitts dem Innendurchmesser des inneren Rohrs. Auf diese Weise bildet sich bei entsprechendem Füllstand innerhalb des inneren Rohrs und des inneren rohrförmigen Abschnitts eine Flüssigkeitssäule mit gleichmäßigem Querschnitt aus, was eine von der Verbindungsstelle zwischen innerem Rohr und innerem rohrförmigen Abschnitt unbeeinträchtigte Ausbreitung der Ultraschallwellen begünstigt.

In einer Ausgestaltung weist der innere rohrförmige Abschnitt an seinem unteren Ende eine Muffe auf, in die das obere Ende des inneren Rohrs eingesetzt ist. Die Muffe kann einteilig mit dem inneren rohrförmigen Abschnitt ausgebildet sein. Sie bildet einen Längsabschnitt, der einen größeren Innendurchmesser aufweist als der innere rohrförmige Abschnitt. Insbesondere kann der Innendurchmesser der Muffe auf den Außendurchmesser des inneren Rohrs abgestimmt sein, so dass das innere Rohr passgenau und annähernd oder vollständig flüssigkeitsdicht in die Muffe eingesetzt werden kann. Selbstverständlich kann das innere Rohr auch in die Muffe eingeklebt oder auf sonstige Weise dichtend mit dieser verbunden werden, beispielsweise mit Hilfe einer Dichtung oder durch Einschrauben oder Verschweißen.

In einer Ausgestaltung verschließt die Muffe eine Entlüftungsöffnung am oben Ende des inneren Rohrs. Bei herkömmlichen Sensoren kann eine solche Entlüftungsöffnung am oberen Ende des inneren Rohrs vorgesehen sein, die in Verbindung mit einer herkömmlichen Kappe für eine Entlüftung des inneren Rohrs sorgt. Sollen derartige innere Rohre mit einer erfindungsgemäßen Kappe kombiniert werden, sollte diese Entlüftungsöffnung verschlossen werden. Die Entlüftungsfunktion wird von der inneren Entlüftungsöffnung in der Kappe übernommen. In der genannten Ausgestaltung kann die Entlüftungsöffnung am oberen Ende des inneren Rohrs auf einfache Weise von der Muffe verschlossen werden, ohne dass hierzu eine Anpassung des inneren Rohrs erforderlich wäre.

In einer Ausgestaltung ist zwischen dem äußeren rohrförmigen Abschnitt und dem äußeren Rohr eine Steckverbindung ausgebildet. Beispielsweise kann der äußere rohrförmige Abschnitt eine weitere Muffe aufweisen, in die das äußere Rohr eingesteckt werden kann. Es können auch ein Innendurchmesser des äußeren rohrförmigen Abschnitts auf einen Außendurchmesser des äußeren Rohrs oder ein Außendurchmesser des rohrförmigen Abschnitts auf einen Innendurchmesser des äußeren Rohrs so abgestimmt werden, dass die beiden genannten Teile ohne weiteres ineinander gesteckt werden können. Die Steckverbindung kann durch Verkleben oder Verschweißen oder Verschrauben fixiert werden. Zusätzlich kann eine Dichtung vorgesehen werden, um die Verbindung flüssigkeitsdicht zu gestalten.

In einer Ausgestaltung ist die Kappe einteilig aus Kunststoff gefertigt. Hierfür eignet sich beispielsweise ein Spritzgießverfahren.

In einer Ausgestaltung ist der Ultraschallsender und -empfänger in einem Gehäuse angeordnet, das mit dem inneren Rohr und mit dem äußeren Rohr verbunden ist. Für diese Verbindung kann das Gehäuse eine Aufnahme für das innere Rohr und eine Aufnahme für das äußere Rohr aufweisen, in welche die beiden Rohre eingesetzt werden können. Die Verbindung zwischen dem inneren Rohr und dem Gehäuse und/oder die Verbindung zwischen dem äußeren Rohr und dem Gehäuse kann tragend ausgebildet sein, so dass das innere Rohr und/oder das äußere Rohr durch die Verbindung mit dem Gehäuse in dem Behälter fest angeordnet sind. Auf diese Weise bildet das Gehäuse einen Träger für das innere Rohr und das äußere Rohr. Der gesamte Füllstandssensor mit dem Ultraschallsender und -empfänger in seinem Gehäuse und dem daran befestigten inneren Rohr und dem daran befestigten äußeren Rohr können eine vormontierte Einheit bilden, gegebenenfalls einschließlich der Kappe. Dies vereinfacht die Montage des Füllstandssensors in einem Behälter.

Die oben genannte Aufgabe wird ebenfalls gelöst durch einen Behälter mit einem Füllstandssensor nach einem der Ansprüche 1 bis 10. Behälter und Füllstandssensor können gegebenenfalls eine vormontierte Einheit bilden.

In einer weiteren Ausgestaltung ist der Behälter ein Öltank für ein Kraftfahrzeug, insbesondere eine Ölwanne.

In einer Ausgestaltung richtet sich die Erfindung auf ein Kraftfahrzeug mit einem Behälter mit einem Füllstandssensor nach Anspruch 11 oder 12.

Die Erfindung wird nachfolgend anhand eines in drei Figuren gezeigten Ausführungsbeispiels näher erläutert. Es zeigen:
- Fig. 1: eine schematische, vereinfachte Querschnittsansicht eines in einem Behälter montierten Füllstandssensors nach der Erfindung,
- Fig. 2: eine Detaildarstellung des oberen Endes des Füllstandssensors aus Fig. 1, ebenfalls in einer vereinfachten, schematischen Darstellung,
- Fig. 3: eine Querschnittsdarstellung der Endkappe des Füllstandssensors aus Fig. 2 entlang der in Fig. 2 mit A-A bezeichneten Schnittebene,
- Fig. 4: einen Teil eines Füllstandssensors nach dem Stand der Technik in einer vereinfachten, schematischen Darstellung.

Fig. 4 wurde bereits einleitend erläutert und zeigt einen Teil eines Füllstandssensors nach dem Stand der Technik.

Fig. 1 zeigt einen in seiner Gesamtheit mit 10 bezeichneten Füllstandssensor, der in einem Behälter 14 montiert ist. In dem Behälter 14 befindet sich eine Flüssigkeit 12.

An seinem unteren Ende weist der Füllstandssensor 10 einen Ultraschallsender und -empfänger 16 auf, der in ein Gehäuse integriert ist. Das Gehäuse, das in der Figur nur schematisch dargestellt ist, ist von unten in eine Öffnung 38 des Behälters eingesetzt. Zwischen dem Gehäuse und dem Boden des Behälters 14 ist eine umlaufende Dichtung 40 angeordnet, so dass die Öffnung 38 des Behälters 14 bei eingesetztem Füllstandssensor 10 flüssigkeitsdicht verschlossen ist.

Die oberen Teile des Füllstandssensors 10 sind innerhalb des Behälters 14 angeordnet und ragen bei dem gezeigten Füllstand der Flüssigkeit 12 nach oben aus der Flüssigkeit heraus. Einzelheiten dieser oberen Teile sind besser in der Fig. 2 erkennbar.

Fig. 2 zeigt ein inneres Rohr 18 und ein äußeres Rohr 20 des Füllstandssensors 10. Das innere Rohr 18 und das äußere Rohr 20 verlaufen nach unten bis zu dem Gehäuse des Ultraschallsenders und -empfängers 16, wobei nahe den unteren Enden des inneren Rohrs 18 und des äußeren Rohrs 20 Öffnungen vorhanden sind, durch die die Flüssigkeit 12 in den Zwischenraum zwischen dem inneren Rohr 18 und dem äußeren Rohr 20 und in das innere Rohr 18 einströmen kann. Dies ist in der Fig. 2 nicht im einzelnen dargestellt.

Weiterhin zeigt Fig. 2 eine Kappe 22, die einteilig aus Kunststoff gefertigt ist und einen inneren rohrförmigen Abschnitt 24 und einen äußeren rohrförmigen Abschnitt 26 aufweist. Der innere rohrförmige Abschnitt 24 schließt sich nach oben an das innere Rohr 18 an. Außerdem weist der innere rohrförmige Abschnitt 24 eine innere Entlüftungsöffnung 28 auf, die in einer zylindrischen Wandung nahe des oberen Endes des inneren rohrförmigen Abschnitts 24 ausgebildet ist und das Innere dieses inneren rohrförmigen Abschnitts 24 mit einem Zwischenraum 32 zwischen dem inneren rohrförmigen Abschnitt 24 und dem äußeren rohrförmigen Abschnitt 26 der Kappe 22 verbindet.

In einer Wandung des äußeren rohrförmigen Abschnitts 26 ist nahe dessen oberem Ende eine äußere Entlüftungsöffnung 30 angeordnet, die den Zwischenraum 32 zwischen dem inneren rohrförmigen Abschnitt 24 und dem äußeren rohrförmigen Abschnitt 26 mit dem Innenraum des Behälters 14 verbindet.

Der innere rohrförmige Abschnitt 24 und der äußere rohrförmige Abschnitt 26 stehen von einem scheibenförmigen Abschnitt 42 der Kappe 22 nach unten vor, so dass sowohl der innere rohrförmige Abschnitt 24 als auch der äußere rohrförmige Abschnitt 26 nach oben von dem scheibenförmigen Abschnitt 42 vollständig abgedeckt sind.

Der Innendurchmesser des äußeren rohrförmigen Abschnitts 26 ist so auf den Außendurchmesser des äußeren Rohrs 20 abgestimmt, dass das äußere Rohr 20 in den inneren rohrförmigen Abschnitt 26 einsetzbar ist.

Der Innendurchmesser des inneren rohrförmigen Abschnitts 24 entspricht dem Innendurchmesser des inneren Rohrs 18, so dass sich im gezeigten, montierten Zustand der Kappe 22 eine durchgängige, glatte, zylindrische Fläche, gebildet von dem inneren Rohr 18 und dem inneren rohrförmigen Abschnitt 24, ergibt, die eine unbeeinträchtige Ultraschallausbreitung innerhalb der Flüssigkeitssäule begünstigt. Am inneren rohrförmigen Abschnitt 24 ist außerdem eine Muffe 34 ausgebildet, in die das innere Rohr 18 eingesetzt ist. Hierzu ist der Innendurchmesser der Muffe 34 auf den Außendurchmesser des inneren Rohrs 18 abgestimmt.

Weiterhin zeigt Fig. 2 eine Entlüftungsöffnung 36 am oberen Ende des inneren Rohrs 18, die von der Muffe 34 verschlossen ist.

Fig. 3 zeigt im Querschnitt die konzentrische Anordnung des inneren rohrförmigen Abschnitts 24 und des äußeren rohrförmigen Abschnitts 26 in der in der Fig. 2 mit A-A bezeichneten Schnittebene. Zwischen dem inneren rohrförmigen Abschnitt 24 und dem äußeren rohrförmigen Abschnitt 26 befindet sich ein ringspaltförmiger Zwischenraum 32.

## Patentansprüche

1. Füllstandssensor (10) zur Erfassung des Füllstands einer Flüssigkeit (12) in einem Behälter (14) mit
- einem Ultraschallsender und -empfänger (16),
- einem inneren Rohr (18) zur Anordnung in dem Behälter (14), das oberhalb des Ultraschallsenders und -empfängers (16) angeordnet ist, so dass eine in dem Behälter (14) befindliche Flüssigkeit (12) in dem inneren Rohr (18) eine Flüssigkeitssäule ausbildet, deren Höhe mit dem Ultraschallsender und -empfänger (16) erfassbar ist,
- einem äußeren Rohr (20), das das innere Rohr (18) umgibt, und
- einer Kappe (22), die das innere Rohr (18) und das äußere Rohr (20) nach oben abdeckt, **dadurch gekennzeichnet, dass**
- die Kappe (22) einen inneren rohrförmigen Abschnitt (24), der sich an das innere Rohr (18) anschließt, einen äußeren rohrförmigen Abschnitt (26), der sich an das äußere Rohr (20)anschließt, eine innere Entlüftungsöffnung (28) für den inneren rohrförmigen Abschnitt (24) und eine äußere Entlüftungsöffnung (30) für den äußeren rohrförmigen Abschnitt (26) aufweist.

2. Füllstandssensor (10) nach Anspruch 1, **dadurch gekennzeichnet, dass** die Länge des inneren rohrförmigen Abschnitts (24) und/oder des äußeren rohrförmigen Abschnitts (26) größer ist als der Innendurchmesser des inneren Rohrs (18).

3. Füllstandssensor (10) nach Anspruch 1 oder 2, **dadurch gekennzeichnet,** das die innere Entlüftungsöffnung (28) das Innere des inneren rohrförmigen Abschnitts (24) mit einem Zwischenraum (32) zwischen dem inneren rohrförmigen Abschnitt (24) und dem äußeren rohrförmigen Abschnitt (26) verbindet.

4. Füllstandssensor (10) nach einem der Ansprüche 1 bis 3, **dadurch gekennzeichnet, dass** die innere Entlüftungsöffnung (28) in einer Wandung des inneren rohrförmigen Abschnitts (24) ausgebildet ist.

5. Füllstandssensor (10) nach einem der Ansprüche 1 bis 4, **dadurch gekennzeichnet, dass** der Innendurchmesser des inneren rohrförmigen Abschnitts (24) dem Innendurchmesser des inneren Rohrs (18) gleicht.

6. Füllstandssensor (10) nach einem der Ansprüche 1 bis 5, **dadurch gekennzeichnet, dass** der innere rohrförmige Abschnitt (24) an seinem unteren Ende eine Muffe (34) aufweist, in die das obere Ende des inneren Rohrs (18) eingesetzt ist.

7. Füllstandssensor (10) nach Anspruch 6, **dadurch gekennzeichnet, dass** die Muffe (34) eine Entlüftungsöffnung (36) am oberen Ende des inneren Rohrs (18) verschließt.

8. Füllstandssensor (10) nach einem der Ansprüche 1 bis 7, **dadurch gekennzeichnet, dass** zwischen dem äußeren rohrförmigen Abschnitt (26) und dem äußeren Rohr (20) eine Steckverbindung ausgebildet ist.

9. Füllstandssensor (10) nach einem der Ansprüche 1 bis 8, **dadurch gekennzeichnet, dass** die Kappe (22) einteilig aus Kunststoff gefertigt ist.

10. Füllstandssensor (10) nach einem der Ansprüche 1 bis 9, **dadurch gekennzeichnet, dass** der Ultraschallsender und -empfänger (16) in einem Gehäuse angeordnet ist, das mit dem inneren Rohr (18) und mit dem äußeren Rohr (20) verbunden ist.

11. Behälter (14) mit einem Füllstandssensor (10) nach einem der Ansprüche 1 bis 10.

12. Behälter (14) nach Anspruch 11, **dadurch gekennzeichnet, dass** der Behälter (14) eine Öltank für ein Kraftfahrzeug ist.

13. Kraftfahrzeug mit einem Behälter (14) mit einem Füllstandssensor (10) nach Anspruch 11 oder 12.

## Claims

1. Fill level sensor (10) for detecting the fill level of a liquid (12) in a container (14), comprising
- an ultrasonic transmitter and receiver (16),
- an inner tube (18) for arrangement in the container (14), which inner tube (18) is arranged above the ultrasonic transmitter and receiver (16) in such a way that a liquid (12) located in the container (14) forms a liquid column in the inner tube (18), the height of which column can be detected using the ultrasonic transmitter and receiver (16),
- an outer tube (20) surrounding the inner tube (18), and
- a cap (22) which covers the inner tube (18) and the outer tube (20) towards the top, **characterized in that**
- the cap (22) comprises an inner tubular section (24) adjoining the inner tube (18), an outer tubular section (26) adjoining the outer tube (20), an inner vent opening (28) for the inner tubular section (24) and an outer vent opening (30) for the outer tubular section (26).

2. Fill level sensor (10) according to Claim 1, **characterized in that** the length of the inner tubular section (24) and/or of the outer tubular section (26) is/are greater than the internal diameter of the inner tube (18).

3. Fill level sensor (10) according to Claim 1 or 2, **characterized in that** the inner vent opening (28) connects the interior of the inner tubular section (24) to a space (32) between the inner tubular section (24) and the outer tubular section (26).

4. Fill level sensor (10) according to any one of Claims 1 to 3, **characterized in that** the inner vent opening (28) is formed in a wall of the inner tubular section (24).

5. Fill level sensor (10) according to any one of Claims 1 to 4, **characterized in that** the internal diameter of the inner tubular section (24) is equal to the internal diameter of the inner tube (18).

6. Fill level sensor (10) according to any one of Claims 1 to 5, **characterized in that** the inner tubular section (24) has at its lower end a coupling sleeve (34) into which the upper end of the inner tube (18) is fitted.

7. Fill level sensor (10) according to Claim 6, **characterized in that** the coupling sleeve (34) closes a vent opening (36) at the upper end of the inner tube (18).

8. Fill level sensor (10) according to any one of Claims 1 to 7, **characterized in that** a plug-in connection is formed between the outer tubular section (26) and the outer tube (20).

9. Fill level sensor (10) according to any one of Claims 1 to 8, **characterized in that** the cap (22) is produced in one piece from plastics material.

10. Fill level sensor (10) according to any one of Claims 1 to 9, **characterized in that** the ultrasonic transmitter and receiver (16) is arranged in a housing which is connected to the inner tube (18) and to the outer tube (20).

11. Container (14) having a fill level sensor (10) according to any one of Claims 1 to 10.

12. Container (14) according to Claim 11, **characterized in that** the container (14) is an oil tank for a motor vehicle.

13. Motor vehicle having a container (14) with a fill level sensor (10) according to Claim 11 or 12.

## Revendications

1. Capteur (10) de niveau pour détecter le niveau d'un liquide (12) dans un réservoir (14), comprenant
- un émetteur et récepteur (16) d'ultrasons,
- un tube (18) intérieur à mettre dans le réservoir (14) étant au-dessus de l'émetteur et récepteur (16) d'ultrasons, de manière à ce qu'un liquide (12) se trouvant dans le réservoir (4) forme dans le tube (18) intérieur une colonne de liquide, dont la hauteur peut être détectée par l'émetteur et récepteur (16) d'ultrasons,
- un tube (20) extérieur, qui entoure le tube (18) intérieur et
- une coiffe (22), qui recouvre vers le haut le tube (18) intérieur et le tube (20) extérieur, **caractérisé en ce que**
- la coiffe (22) a une partie (24) intérieure tubulaire, qui se raccorde au tube (18) intérieur, une partie (26) extérieure tubulaire, qui se raccord au tube (20) extérieur, une ouverture (28) intérieure de mise à l'atmosphère de la partie (24) intérieure tubulaire et une ouverture (30) extérieure de mise à l'atmosphère de la partie (26) intérieure tubulaire.

2. Capteur (10) de niveau suivant la revendication 1, **caractérisé en ce que** la longueur de la partie (24) intérieure et/ou de la partie (26) extérieure tubulaire est plus grande que le diamètre intérieur du conduit (18) intérieur.

3. Capteur (10) de niveau suivant la revendication 1 ou 2, **caractérisé en ce que** l'ouverture (28) intérieure de mise à l'atmosphère met l'intérieur de la partie (24) intérieure tubulaire en communication avec un espace (32) intermédiaire entre la partie (24) intérieure tubulaire et la partie (26) extérieure tubulaire.

4. Capteur (10) de niveau suivant l'une des revendications 1 à 3, **caractérisé en ce que** l'ouverture (28) intérieure de mise à l'atmosphère est constituée dans une paroi de la partie (24) intérieure tubulaire.

5. Capteur (10) de niveau suivant l'une des revendications 1 à 4, **caractérisé en ce que** le diamètre intérieur de la partie (24) intérieure tubulaire est égal au diamètre intérieur du tube (18) intérieur.

6. Capteur (10) de niveau suivant l'une des revendications 1 à 5, **caractérisé en ce que** la partie (24) intérieure tubulaire a, à son extrémité inférieure, un manchon (34), dans lequel l'extrémité supérieure du tube (18) intérieur est insérée.

7. Capteur (10) de niveau suivant la revendication 6, **caractérisé en ce que** le manchon (34) raccorde une ouverture (36) de mise à l'atmosphère à l'extrémité supérieure du tube (18) intérieur.

8. Capteur (10) de niveau suivant l'une des revendications 1 à 7, **caractérisé en ce qu'**un emmanchement est constitué entre la partie (26) extérieure tubulaire et le tube (20) extérieur.

9. Capteur (10) de niveau suivant l'une des revendications 1 à 8, **caractérisé en ce que** la coiffe (22) est fabriquée d'une seule pièce en matière plastique.

10. Capteur (10) de niveau suivant l'une des revendications 1 à 9, **caractérisé en ce que** l'émetteur et récepteur (16) d'ultrasons est disposé dans un boîtier, qui est relié au tube (18) intérieur et au tube (20) extérieur.

11. Réservoir (14) ayant un capteur (10) de niveau suivant l'une des revendications 1 à 10.

12. Réservoir (14) suivant la revendication 11, **caractérisé en ce que** le réservoir (14) est un réservoir à huile pour un véhicule automobile.

13. Véhicule automobile ayant un réservoir (14), comprenant un capteur (10) de niveau suivant la revendication 11 ou 12.
